# EUROPÄISCHE PATENTANMELDUNG

(11) **EP 2 666 586 A1**
(43) Veröffentlichungstag der Anmeldung: **27.11.2013**
(21) Anmeldenummer: 13168591.9
(22) Anmeldetag: 21.05.2013
(51) Int. Cl.: B23Q 3/157

(54) **Werkzeugträgersystem**

(30) Priorität: 24.05.2012 DE 102012104491
(71) Anmelder: Index-Werke GmbH & Co. KG Hahn & Tessky, 73730 Esslingen (DE)
(72) Erfinder: Baumann, Ulrich, 73252 Lenningen (DE); Schleich, Günther, 73269 Hochdorf (DE); Handel, Christoph, 72555 Metzingen (DE); Haderer, Frank-Otto, 73773 Aichwald (DE)
(74) Vertreter: Hoeger, Stellrecht & Partner Patentanwälte

(57) **Zusammenfassung**

Werkzeugträgersystem (20) für eine Werkzeugmaschine umfassend eine Werkzeugträgerbasis (22), wobei insbesondere die Werkzeugträgerbasis (22) und eine Werkstückaufnahme (10) der Werkzeugmaschine zur Bearbeitung von Werkstücken relativ zueinander bewegbar sind, eine an der Werkzeugträgerbasis (22) angeordnete erste Werkzeugträgereinheit (24), welche ein erstes angetriebenes Werkzeugträgerelement (28) mit einem ersten Werkzeugschnittstellenelement (52) einer Werkzeugschnittstelle (68) aufweist, in welches ein zweites Werkzeugschnittstellenelement (62) einer Werkzeugaufnahmeeinheit (60) für ein angetriebenes Werkzeug (64) einsetzbar ist,dadurch gekennzeichnet, dass an der Werkzeugträgerbasis (22) eine zweite Werkzeugträgereinheit (90) mit einem ein zweites Werkzeugträgerelement (98) bildenden und in einer Erstreckungsrichtung (110) verlaufenden Werkzeugträgerkörper (102) angeordnet ist, an welchem mindestens eine Werkzeugaufnahmeeinheit (92) für ein drehfest feststehendes Werkzeug (94) angeordnet und durch Bewegen des Werkzeugträgerkörpers (102) in der Erstreckungsrichtung (110) relativ zur Werkzeugträgerbasis (22) in eine Bearbeitungsstellung bringbar ist.

## Beschreibung

Die Erfindung betrifft ein Werkzeugträgersystem für eine Werkzeugmaschine, umfassend eine Werkzeugträgerbasis, wobei insbesondere die Werkzeugträgerbasis und eine Werkstückaufnahme der Werkzeugmaschine zur Bearbeitung von Werkstücken relativ zueinander bewegbar sind, eine an der Werkzeugträgerbasis angeordnete Werkzeugträgereinheit, welche ein erstes angetriebenes Werkzeugträgerelement mit einem ersten Werkzeugschnittstellenelement einer Werkzeugschnittstelle aufweist, in welches ein zweites Werkzeugschnittstellenelement einer Werkzeugaufnahmeeinheit für ein angetriebenes Werkzeug einsetzbar ist.

Derartige Werkzeugträgersysteme sind aus dem Stand der Technik bekannt.

Diese Werkzeugträgersysteme umfassen üblicherweise Frässpindeln als Werkzeugträgerelement, in welche Werkzeugaufnahmeeinheiten auswechselbar einsetzbar sind.

Bei derartigen Frässpindeln ist jedoch nur immer eine Werkzeugaufnahmeeinheit einsetzbar, wobei ein Wechsel einer Werkzeugaufnahmeeinheit mittels eines Werkzeugwechslers erfolgen kann.

Der Erfindung liegt daher die Aufgabe zugrunde, ein Werkzeugträgersystem derart zu verbessern, dass möglichst viele Werkzeugaufnahmeeinheiten möglichst effizient eingesetzt werden können.

Diese Aufgabe wird bei einem Werkzeugträgersystem der eingangs beschriebenen Art erfindungsgemäß dadurch gelöst, dass an der Werkzeugträgerbasis als zweites Werkzeugträgerelement ein in einer Erstreckungsrichtung verlaufender Werkzeugträgerkörper angeordnet ist, an welchem mindestens eine Werkzeugaufnahmeeinheit für ein drehfest feststehendes Werkzeug angeordnet und durch Bewegen des Werkzeugträgerkörpers in der Erstreckungsrichtung relativ zur Werkzeugträgerbasis in eine Bearbeitungsstellung bringbar ist.

Der Vorteil dieser Lösung ist somit darin zu sehen, dass einerseits das erste angetriebene Werkzeugträgerelement die Möglichkeit eröffnet, mit ausreichend großer Antriebsleistung angetriebene Werkzeuge anzutreiben, ähnlich den Verhältnissen wie sie bei einer konventionellen separaten Frässpindel vorliegen, und dass andererseits als zweites Werkzeugträgerelement ein bewegbarer Werkzeugträgerkörper zur Verfügung steht, der unabhängig vom ersten Werkzeugträgerelement an der Werkzeugträgerbasis abgestützt sowie relativ zu dieser bewegbar und positionierbar ist, um mindestens eine drehfest feststehende oder auch mehrere drehfest feststehende Werkzeugaufnahmeeinheiten für drehfest feststehende und somit nicht angetriebene Werkzeuge in die Bearbeitungsstellung bringen zu können und dann mit diesen das Werkstück bearbeiten zu können, so dass in optimaler Weise Fräsbearbeitungen und Drehbearbeitungen miteinander kombiniert werden können.

Um in der Bearbeitungsstellung eine exakte Positionierung der Werkzeugaufnahmeeinheit zu erreichen, ist vorzugsweise vorgesehen, dass die Werkzeugaufnahmeeinheit für das drehfest feststehende Werkzeug in der Bearbeitungsstellung durch den Werkzeugträgerkörper positioniert und ausgerichtet gehalten ist und somit unabhängig vom Werkzeugträgerelement gehalten ist.

Hinsichtlich der Ausbildung des Werkzeugträgerkörpers sind die unterschiedlichsten Lösungen denkbar.

Beispielsweise wäre es denkbar, dass die Erstreckungsrichtung des Werkzeugträgerkörpers, in welcher die Werkzeugaufnahmeeinheiten für die drehfest feststehenden Werkzeuge aufeinanderfolgend angeordnet sind, einer geraden Linie erfolgt.

Für die raumsparende Speicherung einer möglichst großen Zahl von Werkzeugaufnahmeeinheiten mit entsprechenden drehfest feststehenden Werkzeugen ist es jedoch von Vorteil, wenn die Erstreckungsrichtung des Werkzeugträgerkörpers einer gekrümmten Linie folgt.

Eine besonders günstige Lösung sieht dabei vor, dass die Erstreckungsrichtung des Werkzeugträgerkörpers einer Kreisbahn um eine die erste Werkzeugträgereinheit schneidenden Achse folgt, so dass die Werkzeugaufnahmeeinheiten auf einer Kreisbahn um die Werkzeugträgereinheit angeordnet werden können.

Vorzugsweise verläuft dabei die Erstreckungsrichtung, längs welcher die Werkzeugaufnahmeeinheiten angeordnet sind, das heißt, die gerade Linie, die gekrümmte Linie oder die Kreisbahn, in einer Werkzeugebene.

Um für die Bearbeitung des Werkstücks mit den nicht angetriebenen Werkzeugen eine möglichst große Positioniergenauigkeit zu erreichen, ist vorgesehen, dass der Werkzeugträgerkörper durch mindestens einen Positionierantrieb relativ zur Werkzeugträgerbasis bewegbar ist.

Insbesondere ist es dabei günstig, wenn mit dem Positionierantrieb eine Positionierung des Werkzeugträgerkörpers in der Erstreckungsrichtung durchführbar ist.

Ferner ist es von Vorteil wenn mit dem Positionierantrieb eine Positionierung des Werkzeugträgerkörpers quer zur Erstreckungsrichtung durchführbar ist.

Um außerdem in den Werkzeugträgerkörper ausreichend große Kräfte einleiten zu können, ohne dass die Positioniergenauigkeit leidet, ist vorgesehen, dass der Werkzeugträgerkörper in seinen Relativpositionen zur Werkzeugträgerbasis zur Bearbeitung des Werkstücks mit dem drehfest feststehenden Werkzeug der drehfest feststehenden Werkzeugaufnahmeeinheit an dieser festlegbar ist.

Technisch lässt sich die Aufrechterhaltung der Bearbeitungsgenauigkeit besonders einfach dann realisieren, wenn der Werkzeugträgerkörper in seinen Relativpositionen durch den Positionsantrieb festlegbar ist.

Die drehfest feststehenden Werkzeugaufnahmeeinheiten könnten auswechselbar am Werkzeugträgerkörper angeordnet sein.

Eine besonders präzise Lösung sieht vor, dass die drehfest feststehenden Werkzeugaufnahmeeinheiten fest an dem Werkzeugträgerkörper montiert sind.

Um die Effizienz bei der Bearbeitung von Werkstücken möglichst hoch zu halten, ist vorgesehen, dass mehrere drehfest feststehende Werkzeugaufnahmeeinheiten in jeweils unterschiedlichen Werkzeugpositionen am Werkzeugträgerkörper angeordnet sind.

Eine für eine leistungsstarke Fräsbearbeitung günstige Lösung sieht vor, dass an dem Werkzeugträgerkörper der zweiten Werkzeugträgereinheit die Werkzeugaufnahmeeinheiten für die angetriebenen Werkzeuge gehalten und durch Bewegen des Werkzeugträgerkörpers in eine dem ersten Werkzeugschnittstellenelement des ersten Werkzeugträgerelements zugeordnete Einwechselposition bringbar sind, dass in der Einwechselposition das erste Werkzeugschnittstellenelement und das zweite Werkzeugschnittstellenelement miteinander verbunden sind und dass die derart mit dem ersten Werkzeugträgerelement verbundene Werkzeugaufnahmeeinheit für das angetriebene Werkzeug durch eine zweite Relativbewegung zwischen dem Werkzeugträgerkörper und dem ersten Werkzeugträgerelement in eine Bearbeitungsstellung bewegbar ist, und dass die Werkzeugaufnahmeeinheit in der Bearbeitungsstellung durch das erste Werkzeugträgerelement gehalten und positioniert ist.

Der Vorteil dieser Lösung ist darin zu sehen, dass durch das Anordnen des Werkzeugträgerkörpers an der Werkzeugträgerbasis und die Bewegbarkeit des Werkzeugträgerkörpers relativ zu dem ersten Werkzeugträgerelement die Möglichkeit geschaffen ist, eine Vielzahl von Werkzeugaufnahmeeinheiten für angetriebene Werkzeuge auch am Werkzeugträgerkörper vorzusehen und diese Werkzeugaufnahmeeinheiten schnell in das erste Werkzeugträgerelement einzuwechseln, so dass nicht nur im Fall des drehfest feststehenden Werkzeugs, sondern auch im Fall von Werkzeugaufnahmeeinheiten für angetriebene Werkzeuge ein schneller Wechsel zwischen den Werkzeugen unterschiedlicher Werkzeugaufnahmeeinheiten möglich ist.

Eine kinematische besonders günstige Lösung sieht vor, dass die Werkzeugaufnahmeeinheiten für die angetriebenen Werkzeuge in der Erstreckungsrichtung aufeinanderfolgend angeordnet sind und wechselweise durch Bewegen des Werkzeugträgerkörpers in der Erstreckungsrichtung in eine dem ersten Werkzeugschnittstellenelement des Werkzeugträgerelements zugeordnete Einwechselposition bringbar sind, dass in der Einwechselposition durch eine erste quer zur Erstreckungsrichtung verlaufende Relativbewegung zwischen dem Werkzeugträgerkörper und dem ersten Werkzeugträgerelement das erste Werkzeugschnittstellenelement und das zweite Werkzeugschnittstellenelement aufeinander zu bewegbar und zur Fixierung der Werkzeugaufnahmeeinheit für angetriebene Werkzeuge an dem Werkzeugträgerelement miteinander verbindbar sind, dass die derart mit dem ersten Werkzeugträgerelement verbundene Werkzeugaufnahmeeinheit durch eine zweite Relativbewegung zwischen dem Werkzeugträgerkörper und dem ersten Werkzeugträgerelement zwischen einer Magazinstellung und einer Bearbeitungsstellung hin- und herbewegbar ist, und dass die Werkzeugaufnahmeeinheit in der Bearbeitungsstellung durch das erste Werkzeugträgerelement gehalten und positioniert ist.

Um in der Bearbeitungsstellung eine überbestimmte Positionierung der Werkzeugaufnahmeeinheit zu vermeiden, ist vorzugsweise vorgesehen, dass die jeweilige Werkzeugaufnahmeeinheit in der Bearbeitungsstellung ausschließlich durch das erste Werkzeugträgerelement positioniert und ausgerichtet gehalten ist.

Hinsichtlich der Verbindung der Werkzeugschnittstellenelemente sind die unterschiedlichsten Lösungen denkbar.

Beispielsweise könnten die Werkzeugschnittstellenelemente so ausgebildet sein, dass sie durch eine besondere Verschlussmechanik miteinander verbindbar sind.

Eine vorteilhafte Lösung sieht jedoch vor, dass durch die erste Relativbewegung das erste Werkzeugschnittstellenelement und das zweite Werkzeugschnittstellenelement in einer Einwechselrichtung bewegbar und miteinander verbindbar sind.

Die Einwechselrichtung könnte grundsätzlich in beliebigen Winkeln zur Werkzeugebene verlaufen.

Eine vorteilhafte Lösung sieht vor, dass die Einwechselrichtung in einem Winkel zwischen 0° und weniger als 20° zur Werkzeugebene geneigt verläuft.

Hinsichtlich des Verlaufs der zweiten Relativbewegung wurden bislang keine weiteren Angaben gemacht.

Das heißt, die zweite Relativbewegung kann beispielsweise quer oder schräg zur Werkzeugebene oder in der Werkzeugebene verlaufen.

Vorzugsweise verläuft auch die zweite Relativbewegung quer zur Erstreckungsrichtung.

Dabei könnten die erste und die zweite Relativbewegung immer noch in unterschiedlichen Richtungen relativ zueinander verlaufen.

Eine besonders einfach realisierbare Lösung sieht vor, dass die zweite Relativbewegung zumindest in derselben Fläche wie die erste Relativbewegung, insbesondere parallel zur ersten Relativbewegung und vorzugsweise in Fortsetzung der ersten Relativbewegung verläuft.

Hinsichtlich der Anordnung der einzelnen Werkzeugaufnahmeeinheiten am Werkzeugträgerkörper wurden bislang keine näheren Angaben gemacht.

Vorteilhafterweise ist hierzu vorgesehen, dass der Werkzeugträgerkörper für die Werkzeugaufnahmeeinheiten für die angetriebenen Werkzeuge Halteaufnahmen aufweist, in denen die Werkzeugaufnahmeeinheiten in der Magazinstellung fixierbar sind und dass die Werkzeugaufnahmeeinheiten für die angetriebenen Werkzeuge durch die zweite Relativbewegung von der Magazinstellung in eine Bearbeitungsstellung bringbar sind, in welcher die Werkzeugaufnahmeeinheiten unabhängig von den Halteaufnahmen durch das Werkzeugträgerelement gehalten sind.

Hinsichtlich des unabhängigen Haltens der Werkzeugaufnahmeeinheiten in den Halteaufnahmen in der Bearbeitungsstellung wäre es denkbar, dass die Werkzeugaufnahmeeinheiten auch in der Bearbeitungsstellung noch in Kontakt mit den Halteaufnahmen stehen und durch diese zumindest mitgeführt oder abgestützt werden.

Eine besonders günstige Lösung sieht jedoch vor, die Werkzeugaufnahmeeinheiten für die angetriebenen Werkzeuge in der Bearbeitungsstellung berührungslos zu den Halteaufnahmen angeordnet sind.

Das heißt, dass in der Bearbeitungsstellung die Werkzeugaufnahmeeinheiten keinerlei Abstützung mehr durch die Halteaufnahmen erfahren, so dass in der Bearbeitungsstellung die Werkzeugaufnahmeeinheiten ausschließlich durch das Werkzeugträgerelement positioniert und abgestützt sind.

Hinsichtlich der Möglichkeit, die Werkzeugaufnahmeeinheiten von einer Magazinstellung in die Bearbeitungsstellung zu bringen, wurden bislang keine näheren Angaben gemacht.

Eine kinematisch besonders einfache und vorteilhafte Lösung sieht dabei vor, dass die Werkzeugaufnahmeeinheiten von einer Magazinstellung in eine Bearbeitungsstellung und umgekehrt durch eine Bewegung parallel zur Einwechselrichtung bewegbar sind.

Um ferner die Werkzeugaufnahmeeinheiten in einer Magazinstellung am Werkzeugträgerkörper zu fixieren, ist vorzugsweise vorgesehen, dass Halteaufnahmen des Werkzeugträgerkörpers mit Rasteinrichtungen versehen sind, durch welche die Werkzeugaufnahmeeinheiten in einer Magazinstellung in den Halteaufnahmen fixierbar sind.

Alternativ dazu wäre es aber auch denkbar, anstelle der Rasteinheiten Klemmeinheiten vorzusehen, die durch eine speziell ansteuerbare Klemmeinrichtung entweder die Werkzeugaufnahmeeinheiten in der Magazinstellung festhalten oder freigeben.

Hinsichtlich der detaillierten Ausbildung der Halteaufnahmen wurden im Zusammenhang mit der bisherigen Erläuterung der einzelnen Lösungen keine näheren Angaben gemacht.

So sieht eine besonders einfache Lösung vor, dass die Halteaufnahmen als Durchbrüche ausgebildet sind, welche die Werkzeugaufnahmeeinheiten durchgreifen.

Derartige Halteaufnahmen können dabei unmittelbar im Werkzeugträgerkörper vorgesehen sein.

Eine andere Möglichkeit sieht vor, dass die Halteaufnahmen in den Werkzeugträgerkörper eingesetzte Elemente sind.

Um die Werkzeugaufnahmeeinheiten in den Halteaufnahmen fixieren zu können, ist vorzugsweise vorgesehen, dass die Werkzeugaufnahmeeinheiten umfangsseitig angeordnete erste Halteflächen aufweisen, an welchen die Aufnahmeeinheiten in den Halteaufnahmen des Werkzeugträgerkörpers fixierbar sind.

Ferner ist es weiterhin vorteilhaft, wenn die Werkzeugaufnahmeeinheiten für die angetriebenen Werkzeuge in der Magazinstellung mit den ersten Halteflächen an den zweiten Halteflächen der Halteaufnahmen anliegen und durch Bewegen in die Bearbeitungsstellung bringbar sind, in welcher die ersten Halteflächen berührungsfrei zu den zweiten Halteflächen angeordnet sind.

Das heißt, dass die Halteflächen so gestaltet sind, dass durch einfache Verschiebung der Werkzeugaufnahmeeinheiten zwischen der Magazinstellung und der Bearbeitungsstellung einerseits in der Magazinstellung die Halteflächen einander berühren und somit die Werkzeugaufnahmeeinheiten halten und andererseits durch bloße Relativbewegung, insbesondere in Einwechselrichtung, die Möglichkeit besteht, die ersten und die zweiten Halteflächen berührungsfrei zueinander anzuordnen, um in der Bearbeitungsstellung eine Berührung und somit Führung der Werkzeugaufnahmeeinheiten durch die Halteaufnahmen zu vermeiden.

Vorzugsweise ist vorgesehen, dass die Halteaufnahmen beim Bewegen des Werkzeugträgerkörpers in der Werkzeugebene bewegbar sind und somit beim Bewegen des Werkzeugträgerkörpers in Richtung der Erstreckungsrichtung stets in der Werkzeugebene verbleiben.

Hinsichtlich der Ausbildung des Werkzeugträgerelements wurden im Zusammenhang mit der bisherigen Erläuterung keinerlei nähere Angaben gemacht.

Eine vorteilhafte Lösung sieht vor, dass das erste Werkzeugträgerelement eine Werkzeugspindel ist, die in einem Werkzeugspindelgehäuse drehbar gelagert ist.

Mit einer derartigen Werkzeugspindel besteht die Möglichkeit, die Werkzeugaufnahmeeinheiten und somit die in diesen Werkzeugaufnahmeeinheiten sitzenden Werkzeuge drehend oder rotierend anzutreiben.

Insbesondere besteht bei einer derartigen Werkzeugspindel die Möglichkeit, die Werkzeugspindel mit hoher Antriebsleistung auszustatten, die dann alle Werkzeugaufnahmeeinheiten mit allen Werkzeugen wechselweise aufnehmen kann, so dass dadurch eine hohe Antriebsleistung zur Bearbeitung mit drehend oder rotierend angetriebenen Werkzeugen realisierbar ist.

Vorzugsweise ist dabei vorgesehen, dass die Werkzeugspindel um eine Werkzeugspindelachse drehbar ist, wobei diese insbesondere parallel zur Einwechselrichtung verläuft.

In diesem Fall lassen sich die Bewegung der Werkzeugspindel und die Einwechselrichtung optimal einsetzen.

Die relative Bewegung zwischen dem ersten Werkzeugträgerelement und dem zweiten Werkzeugträgerelement kann in unterschiedlichster Art und Weise realisiert werden.

Beispielsweise ist bei einer Lösung vorgesehen, dass das zweite Werkzeugträgerelement relativ zur Werkzeugträgerbasis in Richtung einer Verschieberichtung bewegbar ist.

Alternativ dazu ist vorgesehen, dass das erste Werkzeugträgerelement relativ zur Werkzeugträgerbasis in Richtung einer Verschieberichtung bewegbar ist. Eine derartige Bewegbarkeit des Werkzeugträgerelements könnte entweder dadurch realisiert werden, dass die erste Werkzeugträgereinheit relativ zur Werkzeugträgerbasis in Richtung der Verschieberichtung bewegbar ist.

Eine andere vorteilhafte Lösung sieht jedoch vor, dass die Werkzeugträgereinheit fest an der Werkzeugträgerbasis gehalten ist und das erste Werkzeugträgerelement relativ zur Werkzeugträgerbasis in Richtung der Verschieberichtung bewegbar ist.

Eine derartige Bewegung des Werkzeugträgerelements relativ zur Werkzeugträgereinheit lässt sich dadurch realisieren, dass das erste Werkzeugträgerelement der Werkzeugträgereinheit in einem inneren Gehäuse angeordnet ist, welches relativ zu einem äußeren Gehäuse in Richtung der Verschieberichtung bewegbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung einer Werkzeugmaschine mit einem erfindungsgemäßen Werkzeugträgersystem;
- Fig. 2: eine vergrößerte Darstellung des Werkzeugträgersystems gemäß Fig. 1 mit in Magazinstellung stehender Werkzeugaufnahmeeinheit und in Werkzeugwechselstellung stehendem Werkzeugträgerelement;
- Fig. 3: eine Darstellung ähnlich Fig. 2 bei in Magazinstellung stehender Werkzeugaufnahmeeinheit und mit dem Werkzeugträgerelement verbundener Werkzeugaufnahmeeinheit;
- Fig. 4: eine Darstellung einer an dem Werkzeugträgerelement fixierten Werkzeugaufnahmeeinheit in einer Bearbeitungsstellung;
- Fig. 5: einen Schnitt längs Linie 5-5 in Fig. 4;
- Fig. 6: eine vergrößerte Darstellung einer Anordnung der Werkzeugaufnahmeeinheit in Bearbeitungsstellung relativ zu einer Halteaufnahme in einem Werkzeugträgerkörper;
- Fig. 7: einen Schnitt ähnlich Fig. 3 durch ein zweites Ausführungsbeispiel eines erfindungsgemäßen Werkzeugträgersystems;
- Fig. 8: eine Draufsicht in Richtung des Pfeils A in Fig. 7;
- Fig. 9: einen Schnitt ähnlich Fig. 3 durch ein drittes Ausführungsbeispiel eines erfindungsgemäßen Werkzeugträgersystems mit Bearbeitungsmöglichkeit durch ein angetriebenes Werkzeug;
- Fig. 10: einen Schnitt längs Linie 10-10 in Fig. 9;
- Fig. 11: einen Schnitt ähnlich Fig. 9 durch das dritte Ausführungsbeispiel mit Bearbeitungsmöglichkeit durch ein drehfest feststehendes Werkzeug;
- Fig. 12: einen Schnitt Längs Linie 12-12 in Fig. 11;
- Fig. 13: einen Schnitt ähnlich Fig. 5 bei in Magazinstellung stehender Werkzeugaufnahmeeinheit und in Werkzeugwechselstellung stehendem Werkzeugträgerelement bei einem zweiten Ausführungsbeispiel eines erfindungsgemäßen Werkzeugträgersystems;
- Fig. 14: eine vergrößerte Darstellung des Schnitts ähnlich Fig. 13 bei in Magazinstellung stehender Werkzeugaufnahmeeinheit und an dem Werkzeugträgerelement fixierter Werkzeugaufnahmeeinheit und
- Fig. 15: einen Schnitt ähnlich Fig. 14 bei in Bearbeitungsstellung stehender Werkzeugaufnahmeeinheit, die an dem Werkzeugträgerelement fixiert ist.

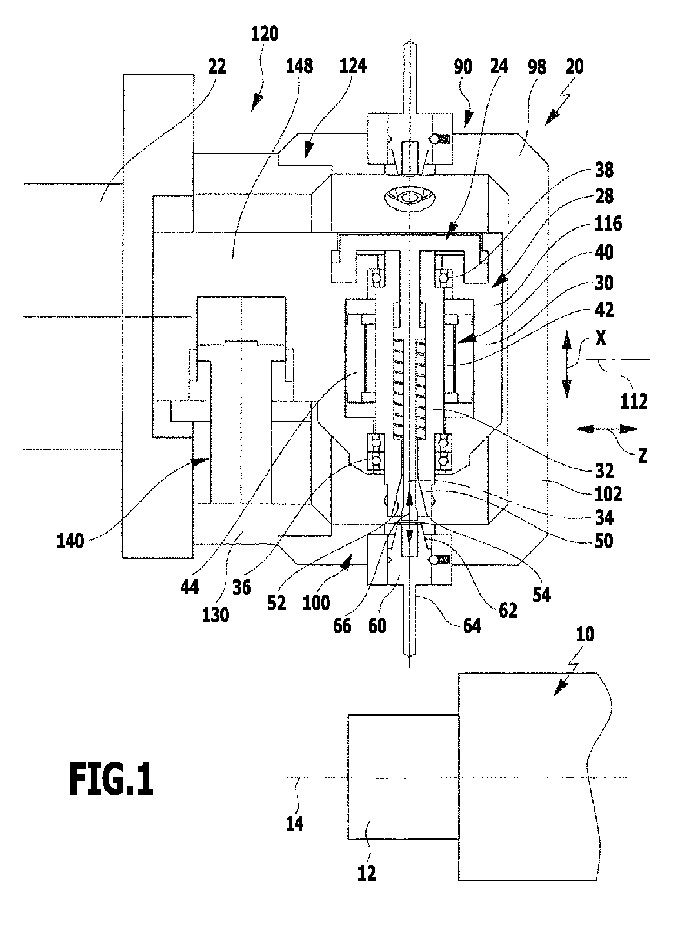

Ein Ausführungsbeispiel einer ausschnittsweise dargestellten Werkzeugmaschine in Fig. 1 umfasst eine Werkstückaufnahme, beispielsweise eine Werkstückspindel 10, in welche ein Werkstück 12 eingespannt ist.

Mit der Werkstückspindel 10 ist das Werkstück 12 um eine Spindelachse 14 rotierend antreibbar und insbesondere um die Spindelachse 14 in beliebigen Drehstellungen festlegbar.

Ferner umfasst die erfindungsgemäße Werkzeugmaschine ein als Ganzes mit 20 bezeichnetes Werkzeugträgersystem mit einer Werkzeugträgerbasis 22, an welcher eine als Ganzes mit 24 bezeichnete erste Werkzeugträgereinheit angeordnet ist.

Mit der Werkzeugträgerbasis 22 ist die erste Werkzeugträgereinheit 24 beispielsweise mindestens in einer X-Richtung relativ zur Werkstückspindelachse 14, und zwar vorzugsweise quer, insbesondere senkrecht zu dieser bewegbar und beispielsweise ist die erste Werkzeugträgereinheit 24 mittels der Werkzeugträgerbasis 22 auch noch in einer zur Werkstückspindelachse 14 parallelen Z-Richtung und gegebenenfalls auch noch in einer quer zur X-Richtung und Z-Richtung verlaufenden Y-Richtung bewegbar.

Es ist aber auch möglich, die Bewegbarkeit in X-Richtung und/oder in Z-Richtung und/oder in Y-Richtung durch eine entsprechend relativ zur Werkzeugträgerbasis 22 bewegbar angeordnete Werkstückspindel 10 zu realisieren. Zur Aufnahme von verschiedenen Werkzeugen umfasst die erste Werkzeugträgereinheit 24 mit einem Werkzeugspindelgehäuse 30, in welchem als erstes Werkezugträgerelement 28 eine Werkzeugspindel 32 um eine Werkzeugspindelachse 34 drehbar gelagert ist, und zwar durch ein die Werkzeugspindel 32 im Werkzeugspindelgehäuse 30 lagerndes vorderes Spindellager 36 und ein hinteres Spindellager 38.

Ferner ist die Werkzeugspindel 32 durch einen als Ganzes mit 40 bezeichneten Spindelmotor antreibbar, welcher einen auf der Werkstückspindel 32 unmittelbar sitzenden Rotor 42 sowie einen im Werkzeugspindelgehäuse 30 angeordneten Stator 44 umfasst, so dass der Rotor 42 ebenfalls über die Spindellager 36 und 38 drehbar gelagert ist und unmittelbar die Werkzeugspindel 32 drehend antreibt.

Zur Aufnahme eines Werkzeugs ist ein vorderes, über das Werkzeugspindelgehäuse 30 überstehendes Spindelende 50 der Werkzeugspindel 32 mit einem ersten Werkzeugschnittstellenelement 52 versehen, welches beispielsweise als sich zu einer Stirnseite 54 der Werkzeugspindel 32 erweiternder Aufnahmekegel ausgebildet ist.

In dieses erste Werkzeugschnittstellenelement 52 ist eine als Ganzes mit 60 bezeichnete Werkzeugaufnahmeeinheit für angetriebene Werkzeuge 64 einsetzbar, welche einerseits ein zweites Werkzeugschnittstellenelement 62 aufweist und andererseits das angetriebene Werkzeug 64 trägt, mit welchem das Werkstück 12 bearbeitbar ist.

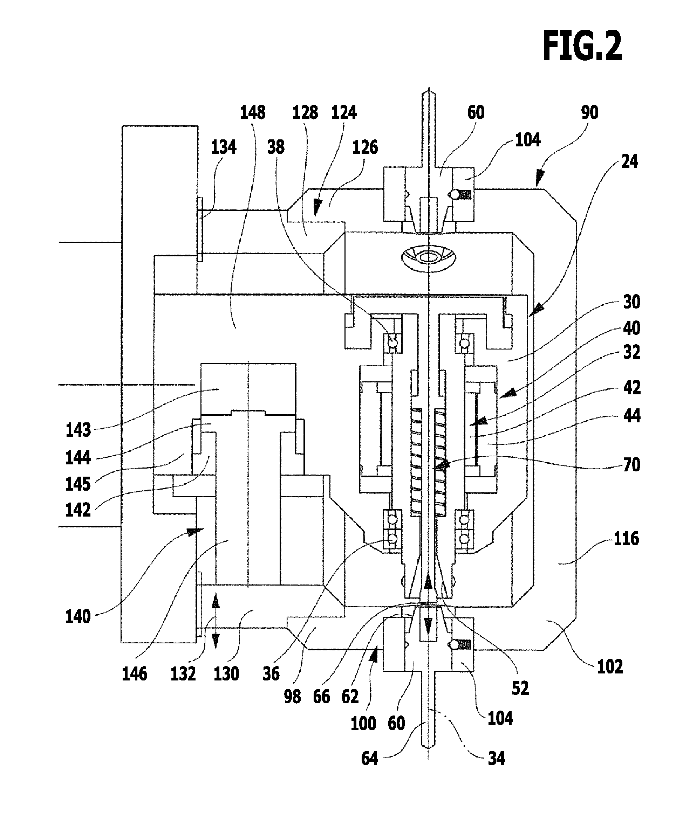

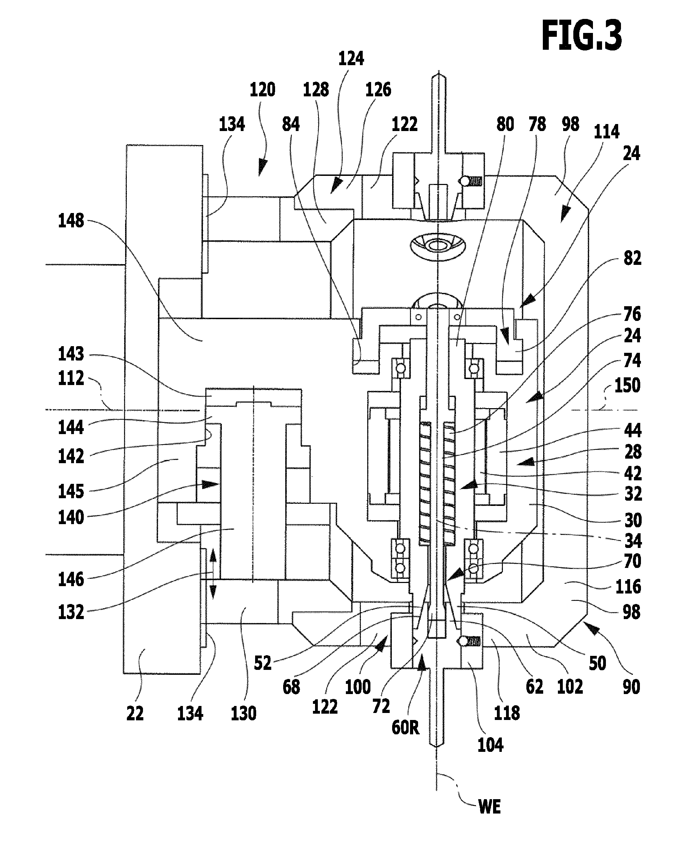

Das zweite Werkzeugschnittstellenelement 62 und das erste Werkzeugschnittstellenelement 52 sind bei einer in Fig. 1 und Fig. 2 dargestellten Einwechselposition der Werkzeugaufnahmeeinheit 60 durch eine erste Relativbewegung in einer Einwechselrichtung 66, die beispielsweise parallel zur Werkzeugspindelachse 34 verläuft, miteinander in Eingriff bringbar, wie in Fig. 3 dargestellt, so dass das zweite Werkzeugschnittstellenelement 62 und das erste Werkzeugschnittstellenelement 52 fest ineinandersitzen und eine Werkzeugschnittstelle 68 bilden (Fig. 3).

Zur Fixierung der Verbindung zwischen dem zweiten Werkzeugschnittstellenelement 62 und dem ersten Werkzeugschnittstellenelement 52 ist eine als Ganzes mit 70 bezeichnete Werkzeugspanneinrichtung vorgesehen, welche einen Spannkopf 72 aufweist, der beispielsweise in das zweite Werkzeugschnittstellenelement 62 eingreift und dieses in Richtung des ersten Werkzeugschnittstellenelements 52 zieht. Hierzu ist der Spannkopf 72 mit einer Spannstange 74 verbunden, welche koaxial zur Werkzeugspindel 32 und in dieser verläuft und durch ein in der Werkstückspindel 32 angeordnetes Spannelement 76, beispielsweise eine Spannfeder, beaufschlagbar ist.

Um der Spannkraft durch das Spannelement 76 zum Wechseln der Werkzeugaufnahmeeinheit 60 und somit zum Lösen der Werkzeugschnittstelle 68 entgegenwirken zu können, ist die Spannstange 74 an ihrem dem Spannkopf 72 gegenüberliegenden Ende mit einer Löseeinheit, beispielsweise mit einem Lösezylinder 78, verbunden, der an einem dem vorderen Spindelende 50 gegenüberliegenden rückwärtigen Spindelende 80 angeordnet ist und einen mit der Spannstange 74 verbundenen Spannkolben 82 umfasst, der in einem drehfest im Werkzeugspindelgehäuse 30 angeordneten Bewegungsraum 84 liegt und in dem Bewegungsraum 84 parallel zur Werkzeugspindelachse 34 bewegbar ist.

Vorzugsweise ist die Spannstange 74 so angeordnet, dass sie relativ zum Spannkolben 82 des Lösezylinders 78 frei drehbar ist und sich somit mit der Werkzeugspindel 32 frei mitdrehen kann.

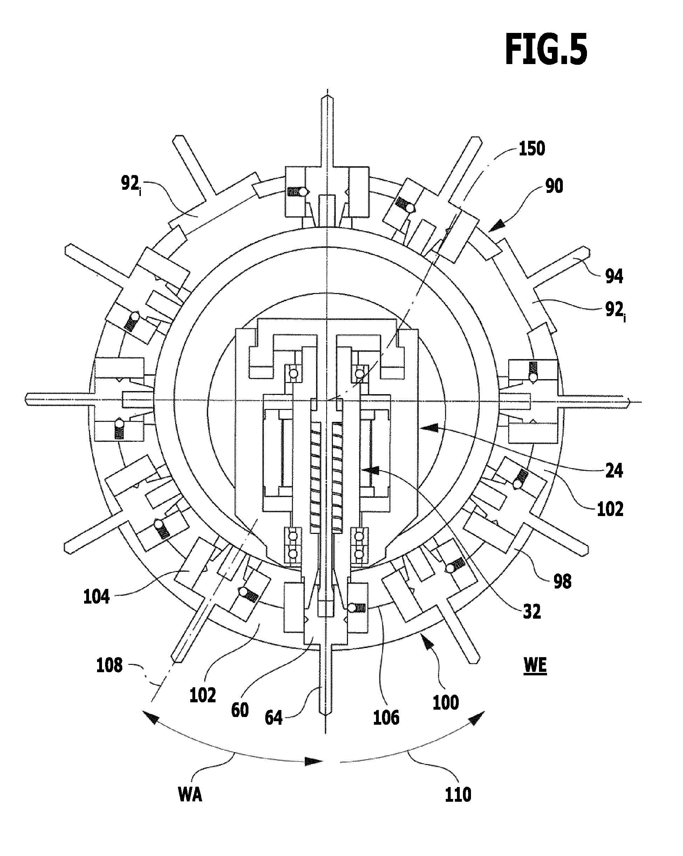

Neben der ersten Werkzeugträgereinheit 24 ist an der Werkzeugträgerbasis 22 eine zweite Werkzeugträgereinheit 90 vorgesehen, welche wie in Fig. 5 dargestellt, Werkzeugaufnahmeeinheiten 92ᵢ für drehfest feststehende Werkzeuge 94ᵢ trägt, wobei insbesondere mehrere der drehfest feststehenden Werkzeuge 94 mit den jeweiligen Werkzeugaufnahmeeinheiten 92ᵢ an der zweiten Werkzeugträgereinheit 90 angeordnet sind.

Die zweite Werkzeugträgereinheit 90 trägt nicht nur die Werkzeugaufnahmeeinheit 92ᵢ sondern dient außerdem als Werkzeugmagazin 100 für die Werkzeugaufnahmeeinheiten 60ᵢ.

Hierzu umfasst die zweite Werkzeugträgereinheit 90 als zweites Werkzeugträgerelement 98 einen Werkzeugträgerkörper 102, in welchem zusätzlich zu den Werkzeugaufnahmeeinheiten 92ᵢ mehrere, insbesondere eine Vielzahl von Halteaufnahmen 104ᵢ, für eine entsprechende Zahl von Werkzeugaufnahmeeinheiten 60ᵢ für angetriebenes Werkzeug 64 angeordnet sind.

Die Halteaufnahmen 104 mit den Werkezugaufnahmeeinheiten 60ᵢ und die Werkzeugaufnahmeeinheiten 92ᵢ liegen insbesondere in einer der Zeichenebene in Fig. 5 entsprechenden oder in Fig. 2 und 3 als Werkzeugebene WE bezeichneten Ebene auf einer geschlossenen Kreisbahn 106, wobei beispielsweise die Halteaufnahmen 104 mit den Werkzeugaufnahmeeinheiten 60ᵢ und die Werkzeugaufnahmeeinheiten 92ᵢ mit ihren Mittelachsen 108 in der Werkzeugebene WE liegen.

Die Halteaufnahmen 104ᵢ und die Werkzeugaufnahmeeinheiten 92ᵢ sind dabei am Werkzeugträgerkörper 102 auf der Kreisbahn 106 in einer quer, insbesondere senkrecht zur ersten Relativbewegung oder Einwechselrichtung 66 verlaufenden Erstreckungsrichtung 110, insbesondere einer Umlaufrichtung, aufeinanderfolgend und insbesondere in konstanten Winkelabständen WA angeordnet.

Die Kreisbahn 106 und die Umlaufrichtung 110 beziehen sich auf eine die erste Werkzeugträgereinheit 24 schneidende Mittelachse 112 des Werkzeugträgerkörpers 102, wobei in diesem Fall der Werkzeugträgerkörper 102 um die Werkzeugträgereinheit 24 herum verlaufend ausgebildet ist und diese umschließt.

Ferner ist, wie in Fig. 1 bis 4 dargestellt, der Werkzeugträgerkörper 102 vorzugsweise als einen Werkzeugträgerring 118 mit umfassende Haube 114 ausgebildet, welche die Werkzeugträgereinheit 24 mit einer oberen Deckelseite 116, die ungefähr parallel zur Werkzeugebene WE verläuft, übergreift, wobei die Deckelseite 116 in einen Werkzeugträgerring 118 der Haube 114 übergeht, in welchem die Halteaufnahmen 104ᵢ für die Werkzeugaufnahmeeinheiten 60 und die Werkzeugaufnahmeeinheiten 92ᵢ angeordnet sind.

Der Werkzeugträgerring 118 erstreckt sich hierbei in Richtung der Werkzeugträgerbasis 22 bis zu einem Fußring 122 der Haube 114 welcher durch einen Drehantrieb 124 einer Positioniereinheit 120 antreibbar ist, wobei der Drehantrieb 124 einen mit dem Fußring 122 verbundenen Rotor 126 trägt, während ein Stator 128 fest mit einer Basis 130 verbunden ist, die ihrerseits relativ zur Werkzeugträgerbasis 22 in einer zur ersten Relativbewegung oder Einwechselrichtung 66 parallelen Verschieberichtung 132 bewegbar geführt ist, wobei dies durch Führungen 134 erfolgt, die eine Bewegung der Basis 130 relativ zur Werkzeugträgerbasis 22 in der Verschieberichtung 132 zulassen.

Zur Positionierung der Basis 130 relativ zur Werkzeugträgerbasis 22 in der Verschieberichtung 132 ist ein als Ganzes mit 140 bezeichneter Verschiebeantrieb der Positioniereinheit 120 vorgesehen, welcher zwei Zylinderkammern 142 und 143 umfasst, durch welche ein Verschiebekolben 144 bewegbar geführt ist, wobei der Verschiebekolben 144 in einem den Verschiebekolben 144 und die Zylinderkammern 142 und 143 aufnehmenden Zylindergehäuse 145 angeordnet ist und über eine Kolbenstange 146 mit der Magazinbasis 130 verbunden ist, um so die Magazinbasis 130 in der Verschieberichtung 132 verschieben zu können.

Vorzugsweise sind die Zylinderkammern 142 und 143 des Verschiebeantriebs 140 in einem Basisteil 148 der Werkzeugträgereinheit 24 angeordnet, mit welcher diese fest an der Werkzeugträgerbasis 22 gehalten ist.

Der Verschiebeantrieb 140 kann bei einer Abwandlung des ersten Ausführungsbeispiels aber auch dazu dienen, bei fest auf der Werkzeugträgerbasis 22 angeordneter Magazinbasis 130, das Basisteil 148 der Werkzeugträgereinheit 24 relativ zu der Werkzeugträgerbasis 22 zu verschieben um die erste und die zweite Relativbewegung realisieren zu können, wobei in diesem Fall die Magazinbasis 130 mitsamt der Mittelachse 112 relativ zur Werkzeugträgerbasis unbewegt stehen bleiben.

Durch den Verschiebeantrieb 140 lässt sich somit die erste Relativbewegung realisieren, wobei die Magazinbasis 130 und damit auch der Werkzeugträgerkörper 102 in eine Werkzeugwechselstellung, dargestellt in Fig. 1 und Fig. 2 bewegbar sind, in welcher die gesamte Haube 114 und somit auch der Werkzeugträgerkörper 102 unabhängig von der Werkzeugspindel 32 frei um die Mittelachse 112 frei gedreht werden können, da die Werkzeugschnittstellenelemente 62 und 52 voneinander getrennt sind und somit insbesondere das zweite Werkzeugschnittstellenelement 62 in einem derartigen Abstand von der Stirnseite 54 des vorderen Spindelendes 50 positioniert ist, so dass keine Kollision zwischen dem zweiten Werkzeugschnittstellenelement 62 und dem vorderen Spindelende 50 auftreten kann.

Damit besteht die Möglichkeit, durch Drehen des Werkzeugträgerkörpers 102 mittels des Drehantriebs 124 eine der in Fig. 1 und 2 schematisch dargestellten Werkzeugaufnahmeeinheiten 60ᵢ in eine Einwechselposition gemäß Fig. 3 zu bringen, in welcher deren zweites Werkzeugschnittstellenelement 62 koaxial zum ersten Werkzeugschnittstellenelement 52 der Werkzeugspindel 32 ausgerichtet ist oder eine der Werkzeugaufnahmen 92ᵢ in eine der Einwechselposition entsprechende Stellung zu bringen, in welcher eine Bearbeitung mit dem entsprechenden Werkzeug 94ᵢ ohne einen Drehantrieb durch die Werkzeugspindel 32 erfolgen kann.

Bei einer Werkzeugaufnahmeeinheit 60ᵢ ist die Verbindung zwischen dem zweiten Werkzeugschnittstellenelement 62 und dem ersten Werkzeugschnittstellenelement 52 dadurch herstellbar, dass bei einer Durchführung der ersten Relativbewegung der Werkzeugträgerkörper 102 und somit auch die Mittelachse 112 in der Einwechselrichtung 66, die beispielsweise parallel zur Werkzeugspindelachse 34 verläuft, verschoben wird, wodurch das zweite Werkzeugschnittstellenelement 62 mit dem ersten Werkzeugschnittstellenelement 52 in Eingriff kommt, so dass eine Werkzeughaltestellung erreicht wird, wie in Fig. 3 dargestellt, und ein Spannen des zweiten Werkzeugschnittstellenelements 62 relativ zum ersten Werkzeugschnittstellenelement 52 mittels der Werkzeugspanneinrichtung 70 erfolgen kann.

In dieser Werkzeughaltestellung sitzt die Werkzeugaufnahmeeinheit 60 nach wie vor fest in der entsprechenden Halteaufnahme 104 des Werkzeugträgers 102.

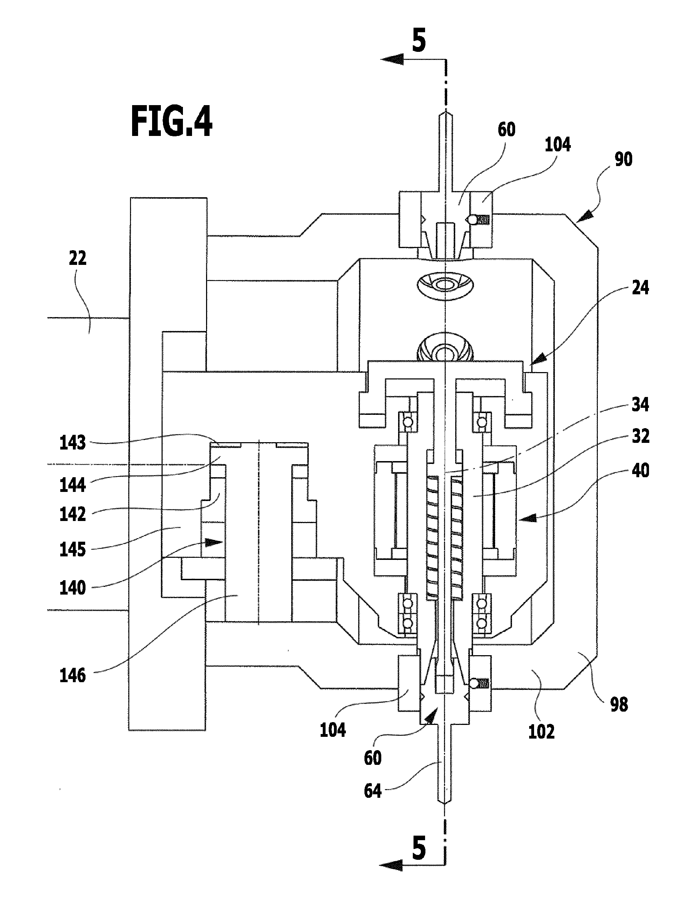

Wird nun in der Werkzeughaltestellung der Werkzeugträgerkörper 102 in Richtung des vorderen Spindelendes 50 der Werkzeugspindel 32 mittels des Verschiebeantriebs 140 unter Mitverschiebung der Mittelachse (112) weiter verschoben, so wird durch diese zweite Relativbewegung, die parallel zur ersten Relativbewegung, insbesondere in Fortsetzung derselben, verläuft, die jeweilige Halteaufnahme 104 weiter in Richtung des Werkzeugspindelgehäuses 30 verschoben, während sich die Werkzeugaufnahmeeinheit 60 durch die feste Verbindung mit der Werkzeugspindel 32 mittels der Werkzeugschnittstellenelemente 52 und 62 nicht mitbewegen kann, so dass die Werkzeugaufnahmeeinheit 60 relativ zur Halteaufnahme 104 von der Magazinstellung (Fig. 3) ausgehend derart verschoben werden kann, dass die Werkzeugaufnahmeeinheit 60 mit dem jeweiligen Werkzeug in Richtung einer Außenseite des Werkzeugträgerkörpers 102 verschoben ist und über die Halteaufnahme 104 übersteht (Fig. 4 bis 6).

Diese Stellung der Werkzeugaufnahmeeinheit 60 wird als Bearbeitungsstellung bezeichnet.

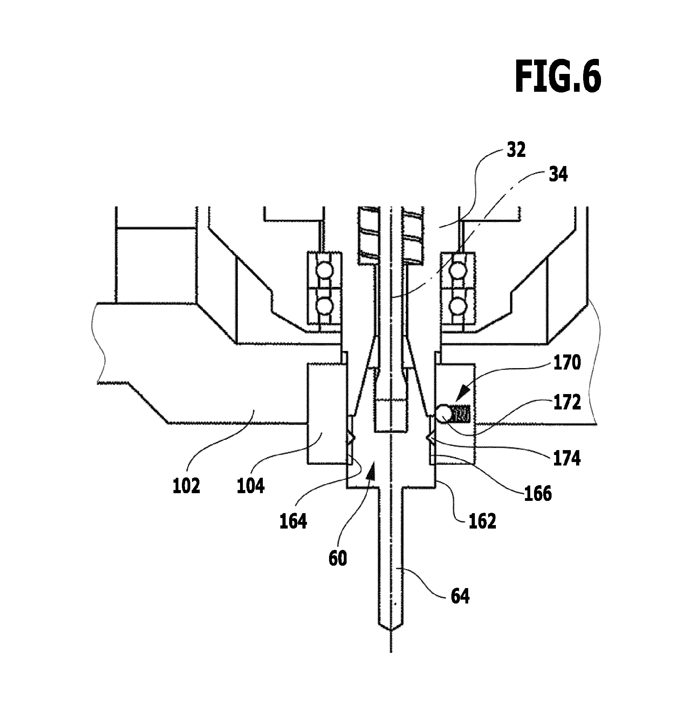

In dieser Bearbeitungsstellung ist die Werkzeugaufnahmeeinheit 60 berührungslos relativ zur Halteaufnahme 104 drehbar, wie im Zusammenhang mit Fig. 4 bis 6 dargestellt, da die Werkzeugaufnahmeeinheit 60 erste Halteflächen 162 aufweist, die in der in Fig. 5 und 6 dargestellten Bearbeitungsstellung gegenüber zweiten Halteflächen 164 der Halteaufnahmen 104 so weit verschoben sind, dass die ersten Halteflächen 162 und die zweiten Halteflächen 164 einander nicht berühren, während in der Bearbeitungsstellung zwischen den zweiten Halteflächen 164 und den diesen gegenüberliegenden Außenflächen 166 der Werkzeugaufnahmeeinheit 60 ein Zwischenraum besteht, der es ermöglicht, dass sich die gesamte Werkzeugaufnahmeeinheit 60 berührungslos zur jeweiligen Halteaufnahme 104 um die Werkzeugspindelachse 34 drehen kann.

Damit erfolgt in der Bearbeitungsstellung auch die Positionierung des Werkzeugs 64ᵢ und somit auch der Werkzeugaufnahmeeinheit 60ᵢ ausschließlich über die Werkzeugspindel 32 und völlig unabhängig von den Halteaufnahmen 104 sowie dem Werkzeugträgerkörper 102.

Eine Positionierung der Werkzeugaufnahmeeinheit 60 durch die Mitwirkung der jeweiligen Halteaufnahme 104 erfolgt erst dann, wenn die Werkzeugaufnahmeeinheit 60 von der Bearbeitungsposition wieder zurückgezogen ist in die Magazinposition, welche in Fig. 2 und 3 dargestellt ist.

In der Magazinposition liegen die ersten Halteflächen 162 der Werkzeugaufnahmeeinheit 60 wiederum an den zweiten Halteflächen 164 der Halteaufnahme 104 an, so dass dadurch eine Abstützung der Werkzeugaufnahmeeinheit 60 relativ zur Halteaufnahme 104 und somit auch relativ zum Werkzeugträgerkörper 102 erfolgen.

Darüber hinaus ist noch zur Fixierung der Werkzeugaufnahmeeinheit 60 in der Halteaufnahme 104 eine Rasteinheit 170 vorgesehen, welche ein Rastelement 172 aufweist, das in eine Rastausnehmung 174 in der Magazinstellung eingreift.

Wird somit in der Magazinstellung der Werkzeugaufnahmeeinheit 60 die Werkzeugschnittstelle 68 gelöst, wie in Fig. 1 und 2 dargestellt, so wird die Werkzeugaufnahmeeinheit 60 in der Magazinstellung einerseits durch die an den zweiten Halteflächen 164 der Halteaufnahme 104 anliegenden ersten Halteflächen 162 der Werkzeugaufnahmeeinheit 60 gehalten und außerdem noch durch die Rasteinrichtung 170, der Rastelemente 172 in die Magazinstellung, wie in Fig. 1 bis 3 dargestellt, in die Rastausnehmung 174 eingreift.

Somit kann in der Magazinstellung der Werkzeugträgerkörper 102 um die Mittelachse 112 wiederum gedreht werden, um die Werkzeugaufnahmeeinheit 60 eines anderen Werkzeugs 64 in Einwechselstellung zu bringen und in der Einwechselstellung das erste Werkzeugschnittstellenelement 52 und das zweite Werkzeugschnittstellenelement 62 durch Bewegen der Werkzeugspindel 32 in der Einwechselrichtung 66 in Eingriff zu bringen und wiederum die weitere Werkzeugaufnahmeeinheit 60 an der Werkzeugspindel 32 für eine weitere Bearbeitung zu fixieren.

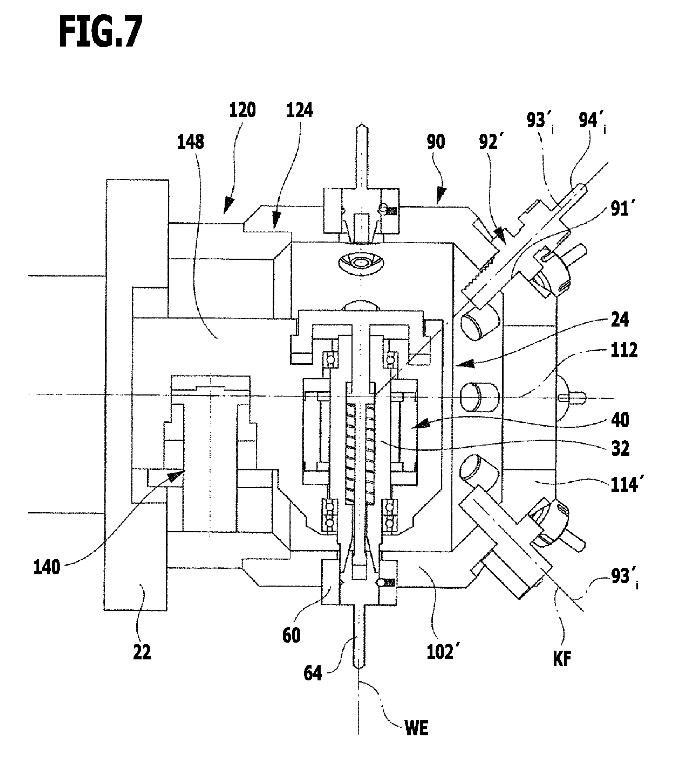

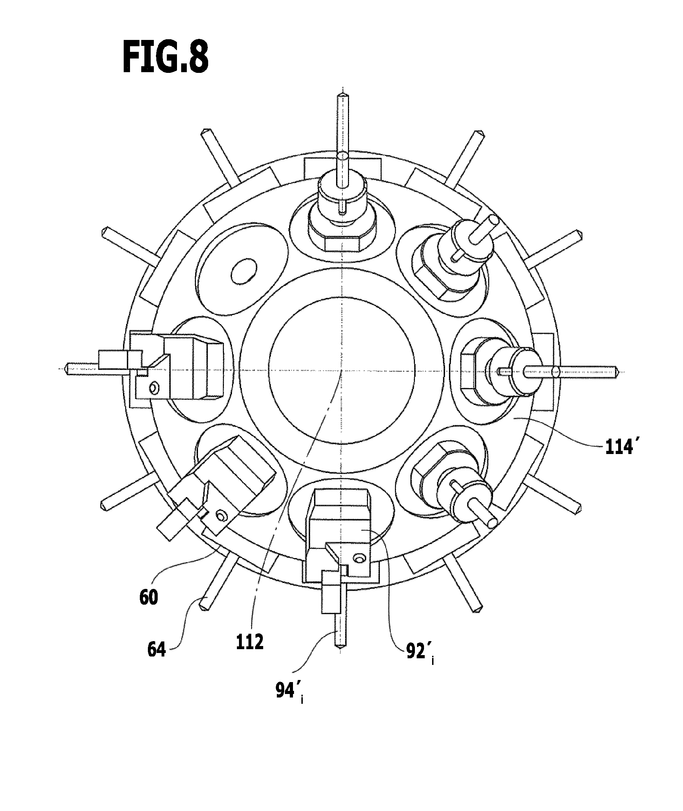

Bei einem zweiten Ausführungsbeispiel, dargestellt in Fig. 7 und Fig. 8 sind diejenigen Teile, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel ist bei dem zweiten Ausführungsbeispiel, dargestellt in Fig. 7 und 8 die Haube 114' des Werkzeugträgerkörpers 102 in der Art eines Kronenrevolvers ausgebildet, so dass in dieser Werkzeugaufnahmen 91 vorgesehen sind, in welche Werkzeugaufnahmeeinheiten 92' einsetzbar sind, wobei Mittelachsen 93' der Werkzeugaufnahmen 91' in einem spitzen Winkel zur Mittelachse 112 des Werkzeugträgerkörpers 102 verlaufen, beispielsweise in einem Winkel zwischen 30° und 60°. Somit liegen die Mittelachsen 93' der Werkzeugaufnahmen 91', in welche die Werkzeugaufnahmeeinheiten 92' einsetzbar sind, auf einer um die Mittelachse 112 des Werkzeugträgerkörpers 102 verlaufenden Kegelfläche KF.

Die Werkzeugaufnahmeeinheiten 92' sind somit so angeordnet, dass sie außerhalb der Werkzeugebene WE liegen.

Ferner sind die Werkzeugaufnahmen 91' so ausgebildet, dass sie zur Aufnahme von auswechselbaren Werkzeugaufnahmeeinheiten 92' geeignet sind, so dass die Werkzeugaufnahmeeinheiten 92' bei dem zweiten Ausführungsbeispiel nicht fest am Werkzeugträgerkörper 102' montiert sind, sondern durch die Werkzeugaufnahmen 91' schnell auswechselbar sind.

Beispielsweise sind die Werkzeugaufnahmen 91' so ausgebildet, dass in diese übliche schnellwechselbare Werkzeugaufnahmeeinheiten 92' einsetzbar sind, beispielsweise Werkzeugaufnahmeeinheiten mit einem Schaft gemäß DIN 69880.

Im Übrigen kann hinsichtlich der weiteren Beschreibung des zweiten Ausführungsbeispiels vollinhaltlich auf die Ausführungen zum ersten Ausführungsbeispiel verwiesen werden.

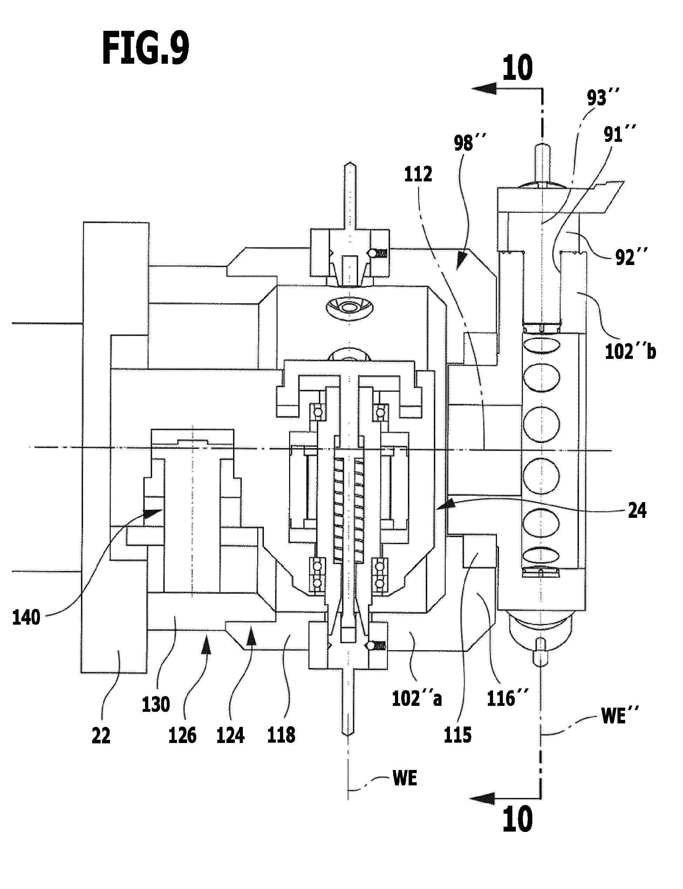

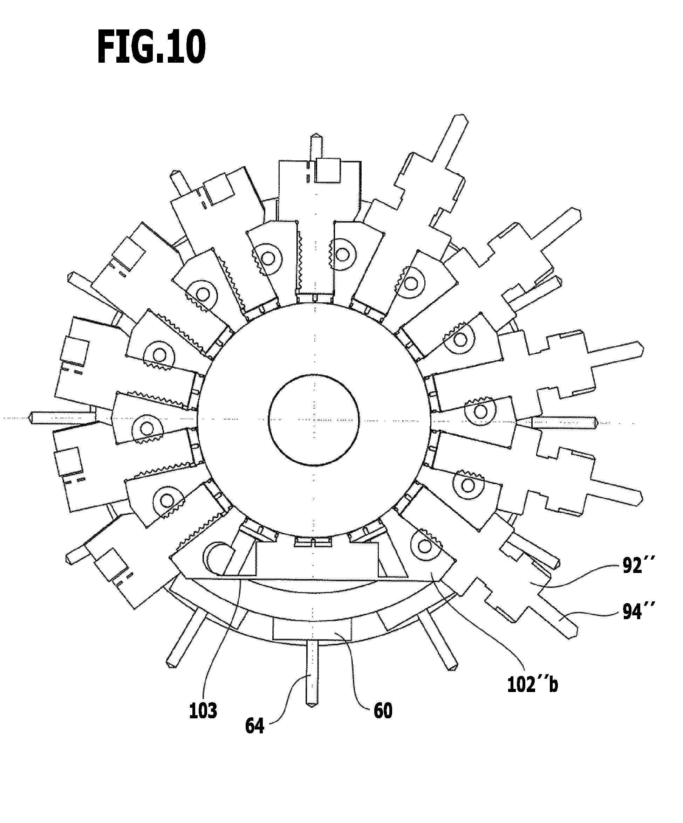

Bei einem dritten Ausführungsbeispiel, dargestellt in den Fig. 9 bis 12 sind diejenigen Teile, die mit denen des ersten oder zweiten Ausführungsbeispiels identisch sind, ebenfalls mit denselben Bezugszeichen versehen, so dass vollinhaltlich auf die Ausführungen hierzu Bezug genommen werden kann.

Auch das dritte Ausführungsbeispiel basiert auf dem ersten Ausführungsbeispiel, wobei die zweite Werkzeugträgereinheit 98" zweigeteilt ausgebildet ist, nämlich einmal einen Werkzeugträgerkörper 102a" aufweist, der ähnlich dem ersten Ausführungsbeispiel ausgebildet ist, also beispielsweise den Werkzeugträgerring 118 und die Deckelseite 116" aufweist, wobei an der Deckelseite 116" ein weiterer Werkzeugträgerkörper 102b" angeordnet ist, welcher beispielsweise die Form eines üblichen Revolverkopfes aufweist und durch einen Dreh- und Positionierantrieb 115 relativ zum Werkzeugträgerkörper 102a" drehbar ist.

Dabei ist der Werkzeugträgerkörper 102b" koaxial zur Mittelachse 112 drehbar an der Deckelseite 116" gehalten und weist Werkzeugaufnahmen 91" auf, deren Mittelachsen 93" radial zur Mittelachse 112 verlaufen.

Auch in diesem Fall sind die Werkzeugaufnahmen 91" für die Werkzeugaufnahmeeinheiten 92" als Werkzeugaufnahmen ausgebildet, die ein schnelles Auswechseln der Werkzeugaufnahmeeinheiten 92" ermöglichen, beispielsweise sind dies Werkzeugaufnahmen gemäß DIN 69880.

Durch den Dreh- und Positionierantrieb besteht nun die Möglichkeit, den Werkzeugkörper 102b" so zu drehen, dass eine ausgeschnittene Seite 103 desselben so positioniert werden kann, dass sie dreh-winkelgleich zu der Bearbeitungsstellung der Werkzeugaufnahmeeinheiten 60 steht, so dass die jeweilige in der Bearbeitungsstellung stehende Werkzeugaufnahmeeinheit 60 mit dem rotierend angetriebenen Werkzeug 64 zur Fräs- oder Bohrbearbeitung eingesetzt werden können, ohne dass die Werkzeuge 94" der Werkzeugaufnahmeeinheiten 92" in dem Werkzeugträgerkörper 102b" die Bearbeitung stören, insbesondere ohne dass Kollisionen mit den Werkzeugen 94" auftreten können.

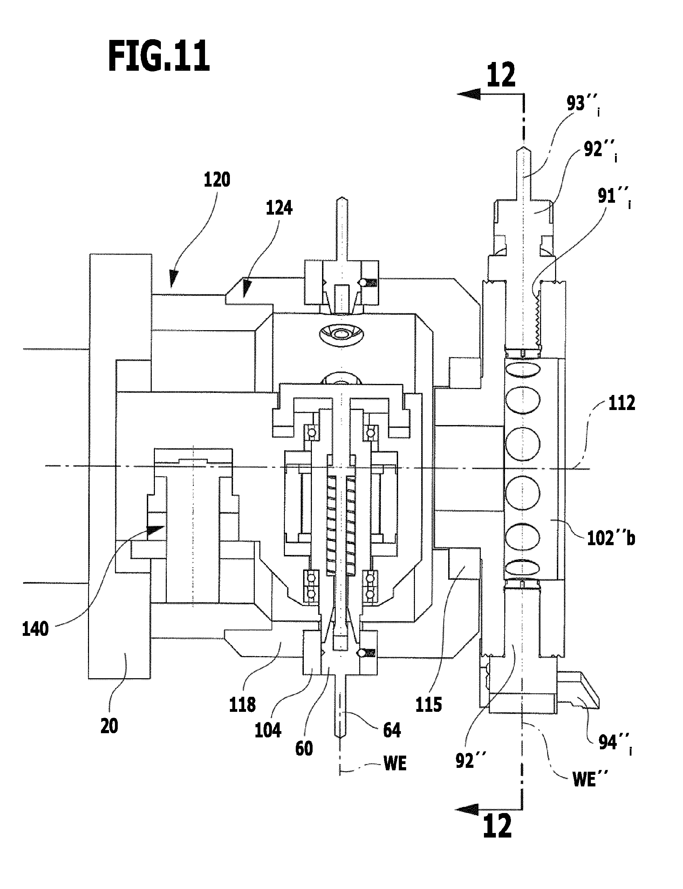

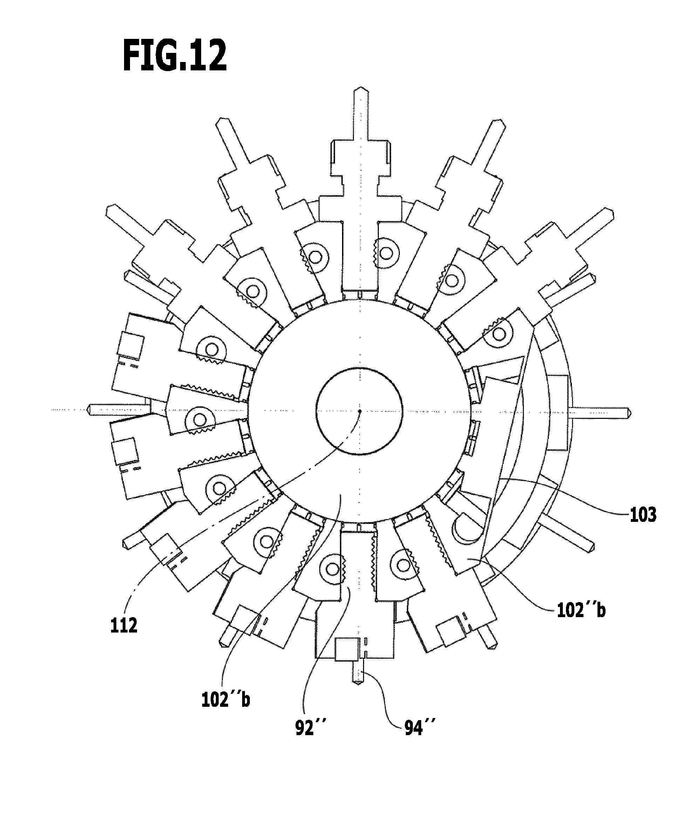

Soll jedoch eine Bearbeitung mit einem der Werkzeuge 94" erfolgen, so kann, wie in Fig. 11 und 12 dargestellt, der Werkzeugträgerkörper 102b" so gedreht werden, dass das jeweilige Werkzeug 94" der jeweiligen Werkzeugaufnahmeeinheit 92" bezogen auf die Mittelachse 112 in einer Drehstellung steht, welche der Bearbeitungsstellung der Werkzeugaufnahmeeinheiten 60 entspricht, da aber in diesem Falle keine Bearbeitung mit einem Werkzeug 64 einer der Werkzeugaufnahmeeinheiten 60 erfolgen soll, ist eine kollisionsfreie Bearbeitung mit einem in dieser Stellung stehenden Werkzeug 94' möglich, wie in Fig. 11 und 12 dargestellt.

Ferner liegen, wie in Fig. 11 dargestellt, die Werkzeugaufnahmeeinheiten 92" mit den Mittelachsen 93"ᵢ in einer Werkzeugebene WE", die parallel zur Werkzeugebene WE verläuft, jedoch gegenüber dieser in Richtung der Mittelachse 112 versetzt, so dass bereits dadurch eine Kollisionsfreiheit zwischen beispielsweise den Werkzeugen 64 in der Werkzeugebene WE und den Werkzeugen 94"ᵢ in der Werkzeugebene WE" ermöglicht wird.

Außerdem besteht noch die Möglichkeit, bei einer Bearbeitung mit einem der Werkzeuge 94" keines der Werkzeuge 64" in die Bearbeitungsposition zu bringen.

Der Positionier- und Drehantrieb 115 dient dabei zur exakten drehfesten Positionierung des Werkzeugträgerkörpers 102b" relativ zum Werkzeugträgerkörper 102a" und auch zum Fixieren der Relativposition des Werkzeugträgerkörpers 102b" zum Werkzeugträgerkörper 102a".

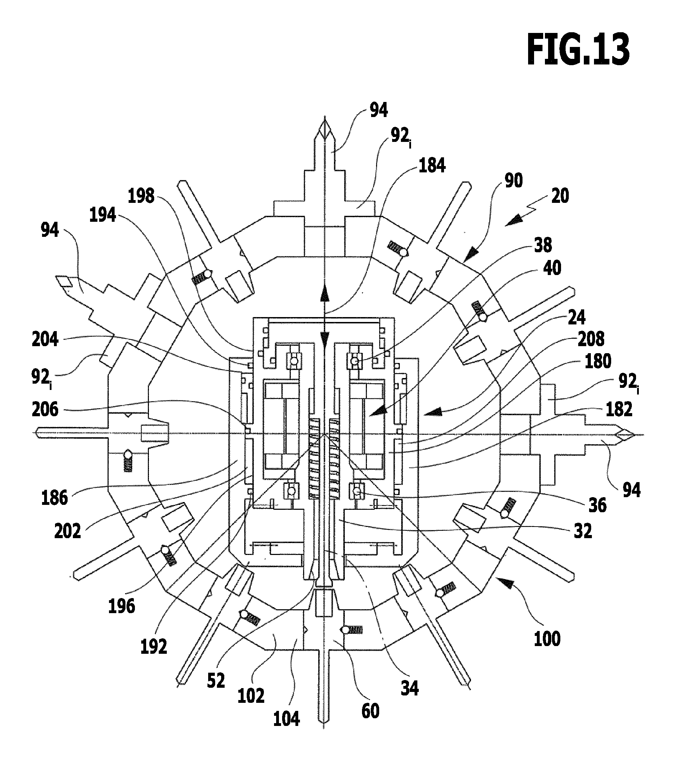

Bei einem vierten Ausführungsbeispiel eines erfindungsgemäßen Werkzeugträgersystems 20', dargestellt in Fig. 13 bis 15, sind weder die erste Werkzeugträgereinheit 24 noch die zweite Werkzeugträgereinheit 90 relativ zur Werkzeugträgerbasis 22 in der Verschieberichtung 132 verschiebbar.

Vielmehr ist die Werkzeugspindel 32 mit den Spindellagern 36 und 38 sowie dem Spindelmotor 40 in einem inneren Spindelgehäuse 180 gelagert, das relativ zu einem äußeren Spindelgehäuse 182 in einer parallel zur Werkzeugspindelachse 34 verlaufenden Verschieberichtung 184 verschiebbar ist, um die erste Relativbewegung und die zweite Relativbewegung realisieren zu können.

Hierzu bildet das äußere Spindelgehäuse 182 ein Zylindergehäuse 186, welches mit Führungsvorsprüngen 192 und 194 an Kolbenmantelflächen 196 und 198 dicht anschließend anliegt.

Zwischen diesen Führungsvorsprüngen 192 und 194 liegen Zylinderkammern 202 und 204, welche durch eine Ringkolbenanordnung 206, die an dem inneren Spindelgehäuse 180 radial außenliegend zwischen den Kolbenmantelflächen 196 und 198 liegt, getrennt sind, wobei die Ringkolbenanordnung 206 dichtend an einer Zylinderinnenfläche 208 anliegt.

Durch Hydraulikbeaufschlagung der Zylinderkammern 202 und 204 ist somit die Ringkolbenanordnung 206 und somit auch der fest mit dieser verbundene innere Spindelgehäuse 180 in der Verschieberichtung 184 relativ zu dem Werkzeugträgerkörper 102 sowie relativ zu in Halteaufnahmen 104 des Werkzeugträgerkörpers 102 sitzenden Werkzeugaufnahmeeinheiten 60 bewegbar, die in dem Werkzeugträgerkörper 102 in gleicher Weise angeordnet sind, wie dies im Zusammenhang mit dem ersten Ausführungsbeispiel beschrieben wurde.

Anstelle der im ersten Ausführungsbeispiel beschriebenen Relativverschiebbarkeit zwischen der Werkzeugträgereinheit 24 und dem zweiten Werkzeugträgerelement 100 in der Verschieberichtung 132 ist beim vierten Ausführungsbeispiel durch die Verschiebbarkeit des inneren Spindelgehäuses 180 relativ zum äußeren Spindelgehäuse 182 ebenfalls die Verschiebbarkeit der Werkzeugspindel 32 relativ zu den Halteaufnahmen 104 möglich und es sind die gleichen Funktionen realisierbar wie dies im Zusammenhang mit dem ersten Ausführungsbeispiel beschrieben wurde.

In Fig. 13 ist die Werkzeugwechselstellung der Werkzeugspindel 32 dargestellt, in welcher der Werkzeugträgerkörper 102 mit den Werkzeugaufnahmeeinheiten in der Erstreckungsrichtung 110 kollisionsfrei zur Werkzeugspindel 32 bewegbar ist.

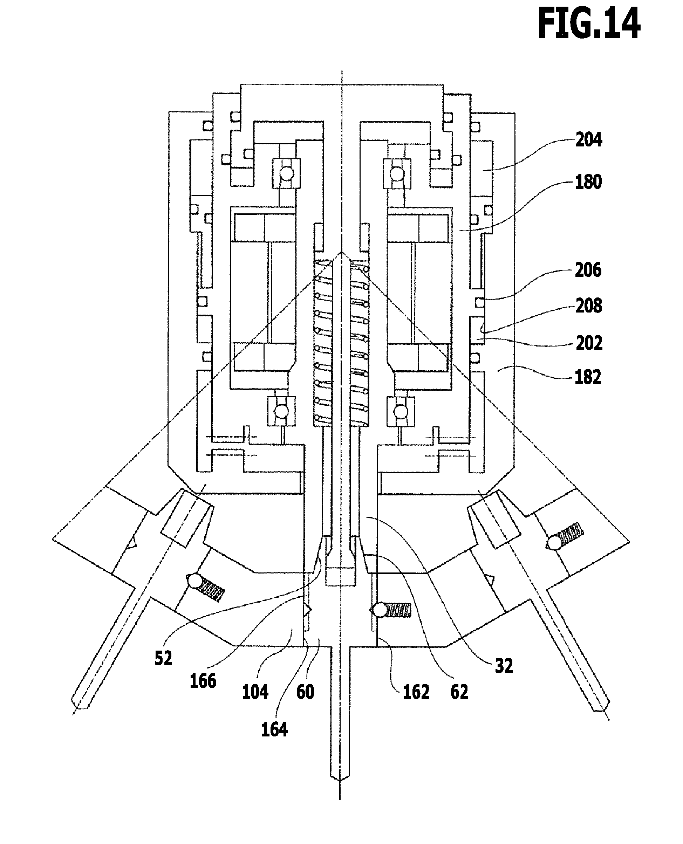

Wie beispielsweise in Fig. 14 dargestellt, ist ausgehend von der Werkzeugwechselstellung durch die erste Relativbewegung das erste Werkzeugschnittstellenelement 52 mit dem zweiten Werkzeugschnittstellenelement 62 zur Herstellung der Werkzeugschnittstelle 68 verbindbar, so dass die Werkzeugspindel 32' in der Werkzeughaltestellung steht, wobei die Werkzeugaufnahmeeinheit 60 noch in der jeweiligen Halteaufnahme 104 in der Magazinstellung steht.

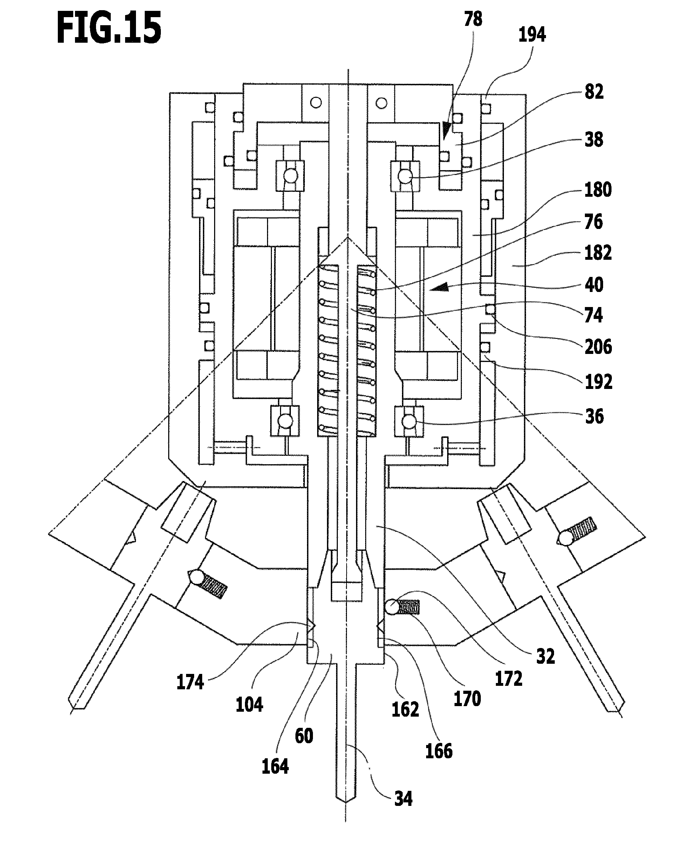

Durch Realisieren der zweiten Relativbewegung, im Fall des zweiten Ausführungsbeispiels durch Verschieben der Werkzeugspindel 32 in der Verschieberichtung 184, besteht nun zusätzlich die Möglichkeit, die Werkzeugaufnahmeeinheit 60 von der Magazinstellung in die Bearbeitungsstellung, dargestellt in Fig. 15 zu verschieben, in welcher die Werkzeugaufnahmeeinheit 60 relativ zur Halteaufnahme 104 frei drehbar und lediglich durch die Werkzeugspindel 32 positioniert ist.

Im Übrigen sind die identischen Teile mit den identischen Bezugszeichen versehen, so dass hinsichtlich der Beschreibung derselben vollinhaltlich auf die Ausführungen zum ersten Ausführungsbeispiel Bezug genommen werden kann.

## Patentansprüche

1. Werkzeugträgersystem (20) für eine Werkzeugmaschine umfassend eine Werkzeugträgerbasis (22), wobei insbesondere die Werkzeugträgerbasis (22) und eine Werkstückaufnahme (10) der Werkzeugmaschine zur Bearbeitung von Werkstücken relativ zueinander bewegbar sind,
eine an der Werkzeugträgerbasis (22) angeordnete erste Werkzeugträgereinheit (24), welche ein erstes angetriebenes Werkzeugträgerelement (28) mit einem ersten Werkzeugschnittstellenelement (52) einer Werkzeugschnittstelle (68) aufweist, in welches ein zweites Werkzeugschnittstellenelement (62) einer Werkzeugaufnahmeeinheit (60) für ein angetriebenes Werkzeug (64) einsetzbar ist,
**dadurch gekennzeichnet, dass** an der Werkzeugträgerbasis (22) eine zweite Werkzeugträgereinheit (90) mit einem ein zweites Werkzeugträgerelement (98) bildenden und in einer Erstreckungsrichtung (110) verlaufenden Werkzeugträgerkörper (102) angeordnet ist, an welchem mindestens eine Werkzeugaufnahmeeinheit (92) für ein drehfest feststehendes Werkzeug (94) angeordnet und durch Bewegen des Werkzeugträgerkörpers (102) in der Erstreckungsrichtung (110) relativ zur Werkzeugträgerbasis (22) in eine Bearbeitungsstellung bringbar ist.

2. Werkzeugträgersystem nach Anspruch 1, **dadurch gekennzeichnet, dass** die mindestens eine Werkzeugaufnahmeeinheit (92) für ein drehfest feststehendes Werkzeug (94) in der Bearbeitungsstellung durch den Werkzeugträgerkörper (102) positioniert und ausgerichtet gehalten ist.

3. Werkzeugträgersystem nach einem der voranstehenden Ansprüche, **dadurch gekennzeichnet, dass** die Erstreckungsrichtung (110) des Werkzeugträgerkörpers (102), längs welcher die Werkzeugaufnahmeeinheiten (92) angeordnet sind, in einer Werkzeugebene (WE) verläuft.

4. Werkzeugträgersystem nach einem der voranstehenden Ansprüche, **dadurch gekennzeichnet, dass** der Werkzeugträgerkörper (102) durch mindestens einen Positionierantrieb (120) relativ zur Werkzeugträgerbasis (22) bewegbar ist.

5. Werkzeugträgersystem nach Anspruch 4, **dadurch gekennzeichnet, dass** mit dem Positionierantrieb (120) eine Positionierung des Werkzeugträgerkörpers (102) in der Erstreckungsrichtung (110) durchführbar ist und dass insbesondere mit dem Positionierantrieb (120) eine Positionierung des Werkzeugträgerkörpers (102) quer zur Erstreckungsrichtung (110) durchführbar ist.

6. Werkzeugträgersystem nach einem der voranstehenden Ansprüche, **dadurch gekennzeichnet, dass** der Werkzeugträgerkörper (102) in seinen Relativpositionen zur Werkzeugträgerbasis (22) zur Bearbeitung des Werkstücks mit dem drehfest feststehenden Werkzeug (94) der Werkzeugaufnahmeeinheit (92) an dieser festlegbar ist und dass insbesondere der Werkzeugträgerkörper (102) in seinen Relativpositionen durch den Positionierantrieb (120) festlegbar ist.

7. Werkzeugträgersystem nach einem der voranstehenden Ansprüche, **dadurch gekennzeichnet, dass** die Werkzeugaufnahmeeinheiten (92) für die drehfest feststehenden Werkzeuge (94) fest an dem Werkzeugträgerkörper (102) montiert sind.

8. Werkzeugträgersystem nach einem der voranstehenden Ansprüche, **dadurch gekennzeichnet, dass** mehrere Werkzeugaufnahmeeinheiten (92) für die drehfest feststehenden Werkzeuge (94) in jeweils unterschiedlichen Werkzeugpositionen am Werkzeugträgerkörper (102) angeordnet sind.

9. Werkzeugträgersystem (20) nach einem der voranstehenden Ansprüche, **dadurch gekennzeichnet, dass** an dem Werkzeugträgerkörper (102) der zweiten Werkzeugträgereinheit (90) Werkzeugaufnahmeeinheiten (60) für angetriebene Werkzeuge (64) gehalten und durch Bewegen des Werkzeugträgerkörpers (102) in eine dem ersten Werkzeugschnittstellenelement (52) des ersten Werkzeugträgerelements (28) zugeordnete Einwechselposition bringbar sind, und in der Einwechselposition das erste Werkzeugschnittstellenelement (52) und das zweite Werkzeugschnittstellenelement (62) miteinander verbunden sind und dass die derart mit dem ersten Werkzeugträgerelement (28) verbundene Werkzeugaufnahmeeinheit (60) für das angetriebene Werkzeug durch eine zweite Relativbewegung zwischen dem Werkzeugträgerkörper (102) und dem ersten Werkzeugträgerelement (28) in eine Bearbeitungsstellung bewegbar ist, und dass die Werkzeugaufnahmeeinheit (60) in der Bearbeitungsstellung durch das erste Werkzeugträgerelement (28) gehalten und positioniert ist.

10. Werkzeugträgersystem (20) nach Anspruch 9, **dadurch gekennzeichnet, dass** die Werkzeugaufnahmeeinheiten (60) für das angetriebene Werkzeug (64) in der Erstreckungsrichtung (110) aufeinanderfolgend angeordnet sind und wechselweise durch Bewegen des Werkzeugträgerkörpers (102) in der Erstreckungsrichtung (110) in eine dem ersten Werkzeugschnittstellenelement (52) des Werkzeugträgerelements (32) zugeordnete Einwechselposition bringbar sind, dass in der Einwechselposition durch eine quer zur Erstreckungsrichtung (110) verlaufende Relativbewegung zwischen dem Werkzeugträgerkörper (102) und dem Werkzeugträgerelement (32) das erste Werkzeugschnittstellenelement (52) und das zweite Werkzeugschnittstellenelement (62) aufeinanderzu bewegbar und zur Fixierung der Werkzeugaufnahmeeinheit (60) an dem Werkzeugträgerelement (32) miteinander verbindbar sind, dass die derart mit dem Werkzeugträgerelement (32) verbundene Werkzeugaufnahmeeinheit (60) durch eine zweite Relativbewegung zwischen dem Werkzeugträgerkörper (102) und dem Werkzeugträgerelement (32) zwischen einer Magazinstellung und einer Bearbeitungsstellung hin- und herbewegbar ist, und dass die Werkzeugaufnahmeeinheit (60) für das angetriebene Werkzeug in der Bearbeitungsstellung durch das Werkzeugträgerelement (32) gehalten und positioniert ist.

11. Werkzeugträgersystem nach Anspruch 10, **dadurch gekennzeichnet, dass** die jeweilige Werkzeugaufnahmeeinheit (60) für das angetriebene Werkzeug in der Bearbeitungsstellung ausschließlich durch das erste Werkzeugträgerelement (32) positioniert und ausgerichtet gehalten ist.

12. Werkzeugträgersystem nach einem der Ansprüche 9 bis 11, **dadurch gekennzeichnet, dass** durch die erste Relativbewegung das erste Werkzeugschnittstellenelement (52) und das zweite Werkzeugschnittstellenelement (62) einer Einwechselrichtung (66) bewegbar und miteinander verbindbar sind.

13. Werkzeugträgersystem nach einem der voranstehenden Ansprüche, **dadurch gekennzeichnet, dass** der Werkzeugträgerkörper (102) für die Werkzeugaufnahmeeinheiten (60) für die angetriebenen Werkzeuge Halteaufnahmen (104) aufweist, in denen die Werkzeugaufnahmeeinheiten (60) in einer Magazinstellung fixierbar sind und dass die Werkzeugaufnahmeeinheiten (60) für die angetriebenen Werkzeuge durch die zweite Relativbewegung von der Magazinstellung in die Bearbeitungsstellung bringbar sind, in welcher die Werkzeugaufnahmeeinheiten (60) für die angetriebenen Werkzeuge unabhängig von den Halteaufnahmen (104) durch das Werkzeugträgerelement (32) gehalten sind.

14. Werkzeugträgersystem nach einem der voranstehenden Ansprüche, **dadurch gekennzeichnet, dass** die Werkzeugaufnahmeeinheiten (60) für die angetriebenen Werkzeuge von einer Magazinstellung in eine Bearbeitungsstellung und umgekehrt durch eine Bewegung parallel zu der Einwechselrichtung (66) bewegbar sind.

15. Werkzeugträgersystem nach einem der Ansprüche 13 oder 14, **dadurch gekennzeichnet, dass** die Werkzeugaufnahmeeinheiten (60) für die angetriebenen Werkzeuge umfangsseitig angeordnete erste Halteflächen (162) aufweisen, an welchen die Werkzeugaufnahmeeinheiten (60) in den Halteaufnahmen (104) des Werkzeugträgerkörpers (102) fixierbar sind.
